(19)

Europäisches
Patentamt
European
Patent Office
Office européen
des brevets

(11) **EP 2 211 632 B1**

(12) **EUROPEAN PATENT SPECIFICATION**

(45) Date of publication and mention
of the grant of the patent:
**16.03.2011 Bulletin 2011/11**

(51) Int Cl.:
*A23F 3/24* (2006.01)      *A23F 3/08* (2006.01)
*A23F 3/16* (2006.01)

(21) Application number: **08846479.7**

(86) International application number:
**PCT/EP2008/064720**

(22) Date of filing: **30.10.2008**

(87) International publication number:
**WO 2009/059928 (14.05.2009 Gazette 2009/20)**

(54) **PROCESS FOR PURIFYING COMPOUNDS FROM TEA**

VERFAHREN ZUR ISOLIERUNG VON VERBINDUNGEN AUS TEE

PROCÉDÉ DE PURIFICATION DE COMPOSÉS ISSUS DU THÉ

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **05.11.2007 EP 07119984**
**12.11.2007 EP 07120447**
**19.12.2007 EP 07123586**
**07.02.2008 EP 08151155**
**02.10.2008 EP 08165775**
**02.10.2008 EP 08165776**

(43) Date of publication of application:
**04.08.2010 Bulletin 2010/31**

(60) Divisional application:
**10193122.8**

(73) Proprietors:
• **Unilever PLC, A Company Registered In England
And
Wales under company no. 41424 of Unilever
House
London EC4Y 0DY
Greater London (GB)**
Designated Contracting States:
**CY GB IE MT**
• **Unilever N.V.
3013 AL Rotterdam (NL)**
Designated Contracting States:
**AT BE BG CH CZ DE DK EE ES FI FR GR HR HU
IS IT LI LT LU LV MC NL NO PL PT RO SE SI SK TR**

(72) Inventors:
• **COLLIVER, Steven, Peter
Sharnbrook Bedfordshire MK44 1LQ (GB)**

• **SHARP, David George
Sharnbrook Bedfordshire MK44 1LQ (GB)**

(74) Representative: **Keenan, Robert Daniel
Unilever Patent Group
Colworth House
Sharnbrook
Bedford
Bedfordshire MK44 1LQ (GB)**

(56) References cited:
**GB-A- 1 284 721      GB-A- 1 329 612
US-A- 3 821 440**

• **DATABASE WPI Week 199803 Thomson
Scientific, London, GB; AN 1998-022145
XP002462465 & JP 09 275903 A (FU K) 28 October
1997 (1997-10-28)**
• **DATABASE WPI Week 199919 Thomson
Scientific, London, GB; AN 1999-222274
XP002462466 & JP 11 056243 A (NARA KEN) 2
March 1999 (1999-03-02)**
• **DATABASE WPI Week 199035 Thomson
Scientific, London, GB; AN 1990-264451
XP002462467 & JP 02 184626 A (ITOEN KK) 19
July 1990 (1990-07-19)**
• **DATABASE WPI Week 200661 Thomson
Scientific, London, GB; AN 2006-588752
XP002462468 & JP 2006 206483 A (KAO CORP)
10 August 2006 (2006-08-10)**
• **DATABASE WPI Week 200278 Thomson
Scientific, London, GB; AN 2002-714457
XP002462469 & CN 1 356 054 A (ZHOU S) 3 July
2002 (2002-07-03)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 211 632 B1

**Description**

**TECHNICAL FIELD OF THE INVENTION**

The present invention relates to a process for purifying compounds from tea. More particularly the present invention relates to the use of tea juice as a raw material for obtaining valuable tea compounds such as bioactive compounds and/or aroma compounds.

**BACKGROUND TO THE INVENTION**

Tea is a beverage traditionally made by infusing the dry leaves of the plant *Camellia sinensis* in boiling water. Tea is (with the exception of water) probably the world's most popular beverage and, in some parts of the world, has traditionally been considered to have health-promoting potential. Recently, extensive laboratory research and epidemiologic studies have shown that many compounds present in tea show bioactivity and may be useful, for example, in treating a variety of illnesses and/or in producing enhanced physical or mental performance.

Polyphenolic compounds such as catechins and theaflavins have been shown to be particularly valuable. Some of the benefits of tea polyphenols may be directly linked to their antioxidant properties. The purported benefits include lowering blood lipid levels (e.g. cholesterol), anti-inflammation effects and antitumour effects.

Another tea compound which has been shown to have bioactivity is the amino acid theanine. For example, it is reported that theanine stimulates $\alpha$-waves in the mammalian brain and bestows a relaxed but alert mental state to the individual.

Besides bioactive compounds, tea also contains compounds which are valued for their sensory qualities. In particular, tea has a unique aroma and is rich in aroma compounds.

Although some of the benefits of tea compounds may be apparent at consumption rates as low as a few cups per day, many individuals do not even achieve this modest consumption rate on a long term basis. Furthermore, tea beverages are less convenient to prepare than beverages prepared from non-tea-based beverage precursors, such as instant coffee, owing to the relatively slow rate of infusion of tea leaves and slow rate of dissolution of tea powders. Also, there is an increasing desire amongst consumers for products which deliver new sensory experiences but which products are derived from natural sources.

There have therefore been many previous efforts to provide products with enhanced levels of compounds derived from tea. In many cases the previous efforts have employed a process wherein the tea compounds are extracted from tea leaves using a solvent, such as water. For example, WO 2006/037511 (Unilever) discloses a process for preferentially extracting theanine from tea plant material which involves a short cold water extraction. One drawback with the known processes is that time and energy are employed to remove the large amounts of solvent required for exhaustive extraction.

Thus we have recognised that there is a need to provide a process for obtaining tea compounds from tea leaf that does not require the use of large amounts of a solvent. We have found that such a need can be met by using the juice expressed from fresh tea leaves as a raw material for the purification of tea compounds.

US 3,821,440 (Brian Eldred Reeve) discloses an instant tea powder of low bulk density rehydratable in hot or cold water to form a clear black tea beverage which is prepared by combining an extract of green or partly fermented tea with a tea extract obtained by oxidising in alkaline solution the water soluble constituents of green or partly fermented tea and drying the combined extract.

GB 1 284 721 A (Finlip Products Ltd) discloses a process of preparing a tea product comprising extracting tea leaves to give an extract (a) of tea solids soluble in cold water, further extracting the tea leaves with hot water or alkaline aqueous solution to give an extract (b), oxidising extract (b) and combining the extracts.

GB 1 329 612 A (Unilever Ltd) discloses an instant tea powder rehydratable to a green tea beverage comprises dried water-soluble solids extracted from unfired green tea.

JP 09-275903 A (KYOTO PREFECTURE) discloses a green tea leaf extract powder is obtained by steaming raw green tea leaves, inactivating oxidases, cooling the resultant green tea leaves, shredding the cooled green tea leaves, pressing the shredded green tea leaves and drying the prepared pressed juice thereof.

JP 11-056243 A (NARA PREFECTURE) discloses a process comprising a step wherein raw tea leaves are steamed, ground and pressed and the pressed juice is subjected to ultrafiltration and reverse osmosis to obtain a concentrated liquid.

JP 02-184626 A (ITOEN KK) discloses an objective agent containing, as an active component, epigallocatechin gallate or epicatechin gallate separated from a soluble extract of tea leaves (e.g. green tea, oolong tea or black tea) or from purified soluble extract. The active component is prepared most preferably by adding about 20-40l of hot water to 1kg of tea leaves, decocting for about 10-30min, optionally pressing the leaves and freeze-drying the obtained juice.

JP 2006-206483 A (KAO CORP) discloses a method for producing a non-polymeric catechin composition which is characterized by adding 0.01-1.0 wt.% water-soluble acidic substance to a water-soluble composition extracted by using water from the green tea leaves to lower its pH to 2.0-5.5, then adsorbing with a column filled with a synthetic adsorbent by 0.5-20 [v/v] as a liquid passing multiple based on the synthetic adsorbent, washing with water by 1-10 [v/v] as a liquid passing multiple based on the synthetic adsorbent and then eluting by passing through 0.5-20 [v/v] amount of 10-95 vol% aqueous ethanol solution based on the filled volume amount of the synthetic adsorbent.

CN 1 356 054 A (SHAOQIAN ZHOU) discloses a tea product which is prepared from fresh tea leaves through pretreatng, grinding, adding water, squeezing juice at 20-80 deg.c and 30-50 kg/sq.cm of pressure, filtering to obtain filtrate, grinding the dregs, adding water, squeezing juice in same condition, filtering to filtrate, merging the filtrate to its liquid tea product, drying until its water content is 20-80 percent to obtain tea cream, and spray drying to obtain powdered tea product.

## DEFINITIONS

### Tea

"Tea" for the purposes of the present invention means material from *Camellia sinensis* var. *sinensis* and/or *Camellia sinensis* var. *assamica.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" refers to tea leaves and/or stem that have never been dried to a water content of less than 30% by weight, and usually have a water content in the range 60 to 90%.

"Tea compound" refers to any compound derived from tea material except for water. Thus tea compounds include all of the tea solids and tea volatiles.

### Expressing Juice

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the fresh leaves during the expression step. However, in order to prevent significant extraction of tea solids by the solvent, the moisture content of the leaves during expression is that of fresh tea leaves as defined hereinabove. In other words, during the expression step, the moisture content of the tea leaves is between 30 and 90% by weight, more preferably between 60 and 90%. It is also preferred that the fresh leaves are not contacted with non-aqueous solvent (e.g. alcohols) prior to or during expression, owing to the environmental & economic problems associated with such solvents.

### Polyphenol

As used herein, the term "polyphenol" refers to one or more of a class compounds comprising a plurality of hydroxyl groups attached to one or more aromatic groups. Typical tea polyphenols include catechin, theaflavin and thearubigin.

As used herein the term "catechin" is used as a generic term for catechin, gallocatechin, catechin gallate, gallocatechin gallate, epicatechin, epigallocatechin, epicatechin gallate, epigallocatechin gallate, and mixtures thereof.

As used herein the term "theaflavin" is used as a generic term for theaflavin, isotheaflavin, neotheaflavin, theaflavin-3-gallate, theaflavin-3'-gallate, theaflavin-3,3'-digallate, epitheaflavic acid, epitheaflavic acid-3'-gallate, theaflavic acid, theaflavic acid-3'-gallate and mixtures thereof. The structures of these compounds are well-known (see, for example, structures xi-xx in Chapter 17 of "Tea - Cultivation to consumption", K.C. Willson and M.N. Clifford (Eds), 1992, Chapman & Hall, London, pp.555-601). The term theaflavins includes salt forms of these compounds. The preferred theaflavins are theaflavin, theaflavin-3-gallate, theaflavin-3'-gallate, theaflavin-3,3'-digallate and mixtures thereof, as these theaflavins are most abundant in tea.

<u>Beverage</u>

As used herein the term "beverage" refers to a substantially aqueous drinkable composition suitable for human consumption.

<u>Leaf Size and Grade</u>

For the purposes of the present invention, leaf particle size is characterised by sieve mesh size using the following convention:

- Tyler mesh sizes are used throughout.
- A "+" before the sieve mesh indicates the particles are retained by the sieve.
- A "-" before the sieve mesh indicates the particles pass through the sieve.

For example, if the particle size is described as -5 +20 mesh, then the particles will pass through a 5 mesh sieve (particles smaller than 4.0 mm) and be retained by a 20 mesh sieve (particles larger than 841 $\mu$m).
Leaf particle size may additionally or alternatively be characterized using the grades listed in the international standard ISO 6078-1982. These grades are discussed in detail in our European patent specification EP 1 365 657 B1 (especially paragraph [0041] and Table 2) which is hereby incorporated by reference.

<u>Enrichment and Purification</u>

Where a given composition is said to be "enriched" in a tea compound, it is meant that the weight fraction of the tea compound in the mixture of tea compounds in the composition is at least one and a half times the weight fraction of the tea compound in the mixture of tea compounds in the tea juice immediately following expression. This can be expressed as shown in equation (1):

$$R = (c_{TC} / c_{TOTAL}) / (m_{TC} / m_{TOTAL}) \geq 1.5, \qquad (1)$$

wherein R is the enrichment factor of a particular tea compound in a given composition, $c_{TC}$ is the mass of the particular tea compound in the given composition, $c_{TOTAL}$ is the total mass of tea compounds in the given composition, $m_{TC}$ is the mass of the particular tea compound in the tea juice and $m_{TOTAL}$ is the total mass of tea compounds in the tea juice.
Similarly "purification" refers to increasing the weight fraction of a tea compound in a composition.

## SUMMARY OF THE INVENTION

We have surprisingly found that juice expressed from tea leaves contains a high content of valuable tea compounds whilst having a water content lower than that typical of a conventional aqueous tea extracts. Furthermore we have found that the juice can be readily fractionated to yield compositions enriched in valuable tea compounds.
Thus the present invention provides a process comprising the steps of:

a) expressing juice from fresh tea leaves thereby to produce leaf residue and juice comprising a mixture of tea compounds;
b) fractionating the mixture; and
c) recovering at least one fraction enriched in at least one tea compound.

The at least one tea compound is theanine.

## DETAILED DESCRIPTION

<u>Expression of Juice</u>

Step (a) of the process of the invention comprises expressing juice from fresh tea leaves.
If the amount of juice expressed is too low then it becomes difficult to separate the juice from the leaf residue and/or leads to an inefficient process. Thus it is preferred that the amount of expressed juice is at least 10 ml per kg of the fresh tea leaves, more preferably at least 25 ml, more preferably still at least 50 ml and most preferably from 75 to 600 ml. When referring to the volume of juice expressed per unit mass of tea leaves it should be noted that the mass of the tea leaves is expressed on an "as is" basis and not a dry weight basis. Thus the mass includes any moisture in the leaves.

The expression step can be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof.

The juice may be obtained from the fresh leaves in a single pressing or in multiple pressings of the fresh leaves. Preferably the juice is obtained from a single pressing as this allows for a simple and rapid process.

In order to minimise degradation of the valuable tea compounds, it is preferred that the expression step is performed at ambient temperature. For example, the leaf temperature may be from 5 to 40°C, more preferably 10 to 30°C.

The time and pressure used in the expression step can be varied to yield the required amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Prior to expression, the fresh tea leaves may undergo a pretreatment including, for example, a unit process selected from heat treatment to deactivate fermentation enzymes, maceration, withering, fermentation or a combination thereof.

If the tea juice and/or leaf residue is to be used to obtain a green tea compound (e.g. catechin) it is preferred that the fresh leaves are heat treated to deactivate fermentation enzymes prior to expression. Suitable heat treatments include steaming and/or pan-frying.

If the tea juice and/or leaf residue is to be used to obtain a black or oolong tea compound (e.g. theaflavin and/or thearubigin) it is preferred that the fresh leaves are not heat treated to deactivate fermentation enzymes prior to expression. The fresh leaves may or may not be fermented prior to expression. If the leaves are fermented prior to expression then it is particularly preferred that they are macerated prior to fermentation.

Whether or not the fresh leaves are fermented, maceration prior to expression may help in decreasing the time and/or pressure required to express the desired quantity of juice.

Fractionation

Step (b) of the process of the invention comprises fractionating the mixture of tea compounds and step (c) comprises recovering at least one fraction enriched in at least one tea compound.

The process may be used to purify any tea compound. However, the preferred tea compounds are those which show bioactivity and/or contribute to aroma. Thus it is preferred that the at least one tea compound is polyphenol, amino acid or an aroma compound. Most preferably the at least one tea compound is theanine and/or an aroma compound.

If the at least one tea compound is polyphenol, then it may be, for example, catechin, theaflavin, thearubigin or a mixture thereof.

If the at least one tea compound is amino acid then it is preferably theanine.

If the at least one tea compound is an aroma compound then it will usually be volatile. By volatile is meant that it will have a vapour pressure of at least 1 Pa at 25°C. Preferably the aroma compound is methanol, acetaldehyde, dimethyl sulphide, 2-methyl-propanal, 2-methyl butanal, 3-methyl butanal, 1-penten-3-one, hexanal, 1-penten-3-ol, E-2-hexenal, Z-3-hexenyl acetate, Z-2-penten-1-ol, hexan-1-ol, Z-3-hexenol, E-2-hexenol, cis-linalool oxide, 1-octen-3-ol, trans-linalool oxide, linalool, α-terpinol, phenyl acetaldehyde, methyl salicylate, geraniol, benzyl alcohol, 2-phenylethanol or a mixture thereof.

Fractionation in step (b) can be achieved using any suitable process capable of separating tea compounds. Examples of such processes include the unit processes of membrane filtration, preparative chromatography, solvent extraction, precipitation, distillation and combinations thereof.

Membrane filtration may include microfiltration, ultrafiltration, nanofiltration, reverse osmosis or a combination thereof. The preferred filtration operation comprises ultrafiltration, nanofiltration or a combination thereof as these are especially effective at purifying bioactive compounds such as polyphenol and/or amino acid. Typically filtration will involve fractionating the mixture of tea compounds into at least one permeate fraction and at least one retentate fraction.

As used herein, the term "preparative chromatography" refers to a preparative process comprising the step of contacting the mixture of tea compounds with a chromatographic medium. The chromatographic medium is a substance which has a different affinity for at least 2 of the tea compounds in the mixture, examples include adsorbant materials. Typically the mixture will be fractionated by the preparative chromatography into at least two fractions differing in the degree to which they interact with the chromatographic medium. In a preferred embodiment, the preparative chromatography is column chromatography. Where the chromatography is column chromatography, the mixture will usually be eluted from the column and fractions collected at varying elution times.

Solvent extraction preferably comprises contacting the mixture of tea compounds with a solvent thereby to yield at least one soluble fraction and at least one insoluble fraction.

Precipitation usually comprises subjecting the mixture to a physical and/or chemical change such that soluble material precipitates out of solution and/or suspended material sediments or creams. Examples of chemical changes include changes in pH, solvent composition, concentration or a combination thereof. Examples of physical changes include heating or cooling, centrifugation or a combination thereof.

Distillation usually comprises heating the mixture to evaporate at least some volatile tea compounds. It is especially preferred that step (b) comprises distillation when the at least one tea compound is an aroma compound.

The at least one fraction enriched in at least one tea compound recovered on step (c) is preferably enriched in the tea compound such that the enrichment factor R is at least 1.7, more preferably at least 2 and most preferably from 3 to 1000.

In a preferred embodiment the at least one fraction is concentrated and/or dried. This allows for stable long-term storage of the fraction. Typically the fraction will be dried to less than 20% moisture by weight, more preferably less than 10% and optimally to 1 to 7% moisture.

It is preferred that the tea compounds from the tea juice are not diluted with further tea compounds (e.g. from tea extract) prior to fractionating the mixture as this will further complicate the fractionation process.

Purification of Theanine

Tea juice is found to be especially rich in theanine compared with conventional tea extracts. Thus in a preferred embodiment the process is a process of purifying theanine from tea, the process comprising the steps of:

a) expressing juice from fresh tea leaves thereby to produce leaf residue and juice comprising a mixture of tea compounds comprising theanine;
b) fractionating the mixture; and
c) recovering at least one fraction enriched in theanine.

In general, similar methods as those known for purifying theanine from tea extracts can be employed in step (b). In particular, such methods include nanofiltration (see, for example, WO 2006/037503) and/or ion exclusion chromatography (see, for example, co-pending International Patent Application No. PCT/EP2008/054817).

Preferably the at least one fraction enriched in theanine comprises theanine in an amount of at least 5%, more preferably at least 8% and most preferably from 10 to 100% by dry weight.

Purification of Aroma

Tea juice is a rich source of aroma compounds. Thus in a preferred embodiment the process is a process of recovering aroma from tea, the process comprising the steps of:

a) expressing juice from fresh tea leaves thereby to produce leaf residue and juice comprising a mixture of tea compounds comprising aroma;
b) fractionating the mixture; and
c) recovering at least one fraction enriched in aroma.

Preferably step (b) comprises a distillation step and step (c) comprises recovering a distillate enriched in aroma. In general, similar methods as those known for distilling aroma from tea extracts can be employed in step (b). In particular, such methods include flash evaporation (see, for example, WO 2003/101215) and/or carrier gas distillation (see, for example, US 4,880,656).

The at least one fraction enriched in aroma preferably has an aroma content of at least 25 mg/l, more preferably at least 50 mg/l, more preferably still at least 100 mg/l, and most preferably to an aroma content in the range of 1000 mg/l to a concentrate that is purely aroma oil (e.g. 900 g/l). The aroma content (or Total Organic Carbon - TOC - can be determined by the method disclosed in WO 2007/079900).

Processing the Leaf Residue

In order to maximise the efficiency of the process it is preferred that the leaf residue is not discarded but is further processed to produce a commercially viable product. In a particularly preferred embodiment, the process comprises an additional step (d) wherein the leaf residue is processed to produce leaf tea.

We have surprisingly found that if the amount of juice expressed is below 300 ml per kg of fresh leaves, the leaf residue can be processed to make leaf tea of at least conventional quality despite the fact that the leaf residue after expression has a lower overall level of tea compounds such as polyphenols and amino acids. In general, the quality of the final leaf tea (e.g. in terms of infusion performance) is better the less juice expressed. Thus it is preferred that the amount of juice expressed in step (a) is less than 300 ml per kg of tea leaves, more preferably less than 275 ml, more preferably still less than 250 ml and most preferably less than 225 ml.

The leaf residue may be processed to produce green leaf tea, black leaf tea or oolong leaf tea. In the case of oolong leaf tea and black leaf tea step (d) comprises fermenting the leaf residue.

The manufacturing processes of green leaf tea, black leaf tea and oolong leaf tea are well known and suitable processes are described, for example, in "Tea: Cultivation to Consumption", K.C. Willson and M.N. Clifford (Eds), 1st Edn, 1992, Chapman & Hall (London), Chapters 13 and 14.

A step common to manufacture of all leaf teas is a drying step. In the case of oolong and black leaf tea, the drying step usually also serves to deactivate the fermentation enzymes. Efficient drying requires high temperatures and so it is preferred that step (d) of the process comprises drying the leaf residue at a temperature of at least 75°C, more preferably at least 90°C.

It is preferred that step (d) comprises sorting the leaf tea, preferably after drying, to achieve a particle size of at least 35 mesh. More preferably the leaf tea is sorted to achieve a particle size of from 30 mesh to 3 mesh. Alternatively or additionally, the leaf tea may be sorted to achieve a leaf tea grade of Pekoe Fannings (PF) grade or larger, more preferably Orange Fannings (OF) or larger and most preferably Broken Orange Pekoe Fannings (BOPF) or larger.

**EXAMPLES**

The present invention will be further described with reference to the following examples.

Example 1

This Example demonstrates the fractionation of tea juice using a type of preparative chromatography known as solid phase extraction (SPE).

*Collection of Juice*

Fresh tea leaves (which had not been withered) were steamed for 60 seconds at ~100°C to inactivate endogenous enzymes and thus prevent fermentation. Steamed leaves, cooled to room temperature, were chopped using a vegetable cutter to yield chopped leaf of average size of around 0.5 to 1 cm$^2$. The dhool was then pressed using a hydraulic press (5 Tonnes applied to a 500 g mass of leaf inside a cylinder of diameter 160 mm, resulting in a downward pressure of 354 psi (2.44 MPa)) to express green tea juice. The yield of green tea juice was 22 ml/100 g dhool, and had a total solids content of 8% by weight. The tea juice was immediately centrifuged for 20 minutes (10000 g at 3°C) and the supernatant was then filter-sterilised using a Nalgene™ filtration unit fitted with a 0.2 $\mu$m filter. The solids content of the tea juice after centrifugation and filtration was 6% by weight.

*Fractionation of Juice*

The green tea juice (1 ml) was applied to a C$_{18}$ SPE cartridge (SDB 200 mg/3 ml, purchased from J.T.Baker, Bakerbond SPE, Lot No. 0316910033). Following collection of the eluate, the cartridge was washed with 1 ml water and then successive 1 ml volumes of methanol-water mixtures (20%, 40%, 60%, 80% and 100% v/v methanol). An additional 4 ml methanol wash was then applied to the cartridge column to ensure all of the compounds adsorbed onto the column were completely washed off. Catechins, caffeine and theanine were analysed from each fraction.

*Results*

The theanine, catechin and caffeine content of tea juice and various methanol fractions is summarised in table 1. A small quantity of theanine (yield of 7.7%) from the tea juice was found in the first eluent. All caffeine and catechins were adsorbed by the SPE cartridge, as these were not detected in the initial eluate. Water and 20% methanol fractions recovered theanine in a yield of 60% and 27% respectively but neither caffeine nor catechins were found in these two fractions. With the increase of methanol in the mobile phase, catechins and caffeine started to elute. Caffeine was mainly washed out when the percentage of methanol increased up to 80%, while catechins mainly started to elute from 60% to 100% methanol washes. There are some interesting differences in elution profiles between individual catechins. The 60% methanol wash eluted 73% of EGC, while most of the ECG (61%) required 80% methanol to be eluted from the column. EC and EGCG were mainly distributed in 60% and 80% methanol fractions. Overall 1 ml of methanol was sufficient to completely remove catechins from the column.

TABLE 1

| Sample | Theanine (mg ml$^{-1}$) | Caffeine (mg ml$^{-1}$) | Catechin (mg ml$^{-1}$) |
|---|---|---|---|
| | | | |
| **Tea Juice before fractionation** | 3.61 | 2.35 | 10.2 |
| | | | |
| **First eluted sample** | 0.28 | N.D.* | N.D.* |
| **water fraction** | 2.18 | N.D.* | N.D.* |
| **20% MeOH fraction** | 0.98 | N.D.* | N.D.* |
| **40% MeOH fraction** | 0.01 | 0.02 | 0.06 |
| **60% MeOH fraction** | N.D.* | 0.04 | 5.75 |
| **80% MeOH fraction** | N.D.* | 0.72 | 3.43 |
| **100% MeOH fraction - 1st ml** | N.D.* | 1.03 | 0.33 |
| **100% MeOH fraction - 2nd ml** | N.D.* | 0.41 | N.D.* |
| **100% MeOH fraction - 3rd ml** | N.D.* | 0.08 | N.D.* |
| **100% MeOH fraction - 4th ml** | N.D.* | N.D.* | N.D.* |
| | | | |
| **% Recovery from SPE** | 95.4 | 97.9 | 93.8 |
| *N.D. = None detected. | | | |

*Production of Powders*

In a separate experiment, 1 ml tea juice was applied to each of six SPE cartridges. The eluate from each cartridge was collected and bulked. Each cartridge was then washed with 1 ml water and the resulting water fractions bulked. Each cartridge was then washed with 1 ml 100% methanol and the resulting methanol fractions bulked. The eluate, water and methanol fractions were each freeze dried to a powder. In addition unfractionated tea juice was directly freeze dried.

Theanine, caffeine and catechins were quantified in each powder by ISO methods where applicable. Table 2 summarises the levels (mg/g dry weight) of each component in each powder fraction.

TABLE 2

| Component | Tea Juice | First Eluate | Water fraction | MeOH fraction |
|---|---|---|---|---|
| Theanine | 48 | 13 | 130 | 0 |
| Catechins | 170 | 0 | 0 | 540 |
| Caffeine | 34 | 0 | 0 | 70 |

Example 2

This Example demonstrates the recovery of aroma compounds from tea juice by distillation.

*Collection of Juice*

Tea juice was obtained by the same method as described in Example 1.

*Fractionation of Juice*

The tea juice (220 ml) was subjected to rotary evaporation at 60°C for 1 hour under partial vacuum. This resulted in 132 ml of condensate enriched in aroma (116 mg/l TOC).

*Production of Leaf Tea*

The pressed residual dhool resulting from the juice production above was broken up by hand and then dried using a fluidized bed drier (ten minutes at 90°C, followed by ten minutes at 120°C) to obtain a leaf tea with moisture content of 3%.

**Claims**

1. A process comprising the steps of:

   a) expressing juice from fresh tea leaves having a moisture content of from 30 to 90% by weight, thereby to produce leaf residue and juice comprising a mixture of tea compounds, wherein tea compound means any compound derived from tea material except for water;
   b) fractionating the mixture; and
   c) recovering at least one fraction enriched in theanine, wherein the weight fraction of theanine in the mixture of tea compounds in the fraction is at least one and a half times the weight fraction of theanine in the mixture of tea compounds in the tea juice immediately following expression in step (a).

2. A process according to claim 1 wherein step (b) comprises a unit process selected from membrane filtration, preparative chromatography, solvent extraction, precipitation, distillation and combinations thereof.

3. A process according to any one of the preceding claims wherein the process comprises the additional step of:

   d) processing the leaf residue to produce leaf tea.

4. A process according to claim 3 wherein the amount of expressed juice in step (b) is between 10 and 300 ml per kg of the fresh tea leaves.

5. A process according to claim 3 or 4 wherein step (d) comprises fermenting the leaf residue.

6. A process according to claim 5 wherein the leaf tea is black leaf tea.

7. A process according to any one of the preceding claims wherein the mixture of tea compounds is not diluted with further tea compounds prior to or during step (b).

8. A process according to claim 7 wherein the juice is not mixed with tea extract prior to or during step (b).

9. A process according to claim 1 wherein the at least one fraction enriched in theanine comprises theanine in an amount of at least 5% by dry weight, preferably at least 8%.

10. A process according to claim 9 wherein the at least one fraction enriched in theanine comprises theanine in an amount of from 10 to 100% by dry weight.

**Patentansprüche**

1. Verfahren, umfassend die Schritte:

   a) Ausdrücken von Saft aus frischen Teeblättern, die einen Feuchtigkeitsgehalt von 30 bis 90 Gew.-% haben, um **dadurch** Blätterrückstand und Saft, der ein Gemisch von Teeverbindungen umfasst, zu produzieren, wobei Teeverbindung eine Verbindung bedeutet, die aus Teematerial stammt, außer Wasser;
   b) Fraktionieren des Gemisches und
   c) Gewinnen wenigstens einer an Theanin angereicherten Fraktion, wobei die Gewichtsfraktion von Theanin in dem Gemisch von Teeverbindungen in der Fraktion wenigstens das Eineinhalbfache der Gewichtsfraktion von Theanin in dem Gemisch von Teeverbindungen in dem Teesaft unmittelbar nach Auspressen in Schritt (a) ist.

**2.** Verfahren gemäß Anspruch 1, wobei Schritt (b) ein Einheitsverfahren umfasst, das aus Membranfiltration, präparativer Chromatographie, Lösungsmittelextraktion, Präzipitation, Destillation und Kombinationen davon ausgewählt ist.

**3.** Verfahren gemäß einem der vorangehenden Ansprüche, wobei das Verfahren den zusätzlichen Schritt:

d) Verarbeiten des Blätterrückstands unter Herstellung von Blatttee umfasst.

**4.** Verfahren gemäß Anspruch 3, wobei die Menge an ausgepresstem Saft in Schritt (b) zwischen 10 und 300 ml pro kg der frischen Teeblätter liegt.

**5.** Verfahren gemäß Anspruch 3 oder 4, wobei Schritt (d) Fermentieren des Blätterrückstandes umfasst.

**6.** Verfahren gemäß Anspruch 5, wobei der Blatttee schwarzer Blatttee ist.

**7.** Verfahren gemäß einem der vorangehenden Ansprüche, wobei das Gemisch von Teeverbindungen vor oder während Schritt (b) nicht mit weiteren Teeverbindungen verdünnt wird.

**8.** Verfahren gemäß Anspruch 7, wobei der Saft vor oder während Schritt (b) nicht mit Teeextrakt gemischt wird.

**9.** Verfahren gemäß Anspruch 1, wobei die wenigstens eine an Theanin angereicherte Fraktion Theanin in einer Menge von wenigstens 5 Trockengewichtsprozent, vorzugsweise wenigstens 8 Trockengewichtsprozent, umfasst.

**10.** Verfahren gemäß Anspruch 9, wobei die wenigstens eine an Theanin angereicherte Fraktion Theanin in einer Menge von 10 bis 100 Trockengewichtsprozent umfasst.

**Revendications**

**1.** Procédé comprenant les étapes consistant à :

a) extraire le jus de feuilles de thé fraîches possédant une teneur en eau de 30 à 90 % en poids, produisant ainsi un résidu de feuille et un jus comprenant un mélange de composés du thé, le composé du thé signifiant tout composé dérivé d'une substance du thé mis à part l'eau ;
b) fractionner le mélange ; et
c) récupérer au moins une fraction enrichie en théanine, la fraction en poids de théanine dans le mélange des composés du thé dans la fraction étant au moins une fois et demi la fraction en poids de la théanine dans le mélange de composés de thé dans le jus de thé immédiatement après l'extraction de l'étape (a).

**2.** Procédé selon la revendication 1, dans lequel l'étape (b) comprend un procédé unitaire choisi parmi la filtration sur membrane, la chromatographie préparative, l'extraction avec un solvant, la précipitation, la distillation et des combinaisons de celles-ci.

**3.** Procédé selon l'une quelconque des revendications précédentes, le procédé comprenant l'étape supplémentaire consistant à :

d) traiter le résidu de feuille pour produire du thé en feuilles.

**4.** Procédé selon la revendication 3, dans lequel la quantité de jus extrait dans l'étape (b) est comprise entre 10 et 300 ml par kilogramme de feuilles de thé fraîches.

**5.** Procédé selon la revendication 3 ou 4, dans lequel l'étape (d) comprend la fermentation du résidu de feuille.

**6.** Procédé selon la revendication 5, dans lequel le thé en feuilles est du thé noir en feuilles.

**7.** Procédé selon l'une quelconque des revendications précédentes, dans lequel le mélange des composés du thé n'est pas dilué avec d'autres composés du thé avant ou pendant l'étape (b).

**8.** Procédé selon la revendication 7, dans lequel le jus n'est pas mélangé avec un extrait de thé avant ou pendant l'étape (b).

**9.** Procédé selon la revendication 1, dans lequel la ou les fractions enrichies en théanine comprennent de la théanine en une quantité d'au moins 5 % en poids sec, de préférence d'au moins 8 %.

**10.** Procédé selon la revendication 9, dans lequel la ou les fractions enrichies en théanine comprennent de la théanine en une quantité de 10 à 100 % en poids sec.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006037511 A
- US 3821440 A
- GB 1284721 A
- GB 1329612 A
- JP 9275903 A
- JP 11056243 A
- JP 2184626 A
- JP 2006206483 A
- CN 1356054 A
- EP 1365657 B1
- WO 2006037503 A
- EP 2008054817 W
- WO 2003101215 A
- US 4880656 A
- WO 2007079900 A

### Non-patent literature cited in the description

- **Tea - Cultivation to consumption.** Chapman & Hall, 1992, 555-601
- **Tea: Cultivation to Consumption.** Chapman & Hall, 1992